# EUROPÄISCHE PATENTSCHRIFT

(11) **EP 3 418 474 B1**
(45) Veröffentlichungstag und Bekanntmachung des Hinweises auf die Patenterteilung: **28.04.2021**
(21) Anmeldenummer: 17176743.7
(22) Anmeldetag: 19.06.2017
(51) Int. Cl.: E04H 4/08

(54) **TRANSPARENTES SCHWIMMBADABDECKUNGSPROFIL**
TRANSPARENT SWIMMING POOL COVER PROFILE
TRANSPARENT PROFILÉ DE COUVERTURE DE PISCINE

(43) Veröffentlichungstag der Anmeldung: 26.12.2018
(73) Patentinhaber: DURECHAIN Sprl, 4800 Petit Rechain (BE)
(72) Erfinder: HELGE, Hans-Heinz, 4800 Petit Rechain (BE)
(74) Vertreter: Reuther, Martin

(56) Entgegenhaltungen:
- WO-A1-2014/190399
- DE-A1- 3 044 949
- DE-B3- 10 304 536
- DE-B3-102009 060 038
- DE-C1- 19 646 117

## Beschreibung

Die Erfindung betrifft ein transparentes Schwimmbadabdeckungsprofil gemäß Anspruch 1 mit wenigstens einem Längskanal sowie mit wenigstens einer Längsbefestigungsnut an einer Längsseite, wobei der Längskanal wenigstens teilweise oberhalb der Längsbefestigungsnut angeordnet ist.

Profile für Schwimmbadabdeckungen sind beispielsweise aus der NL 1 024 414 C, der FR 2 795 117 A1, der FR 2 761 711 A1, der DE 103 03 204 A1 oder DE 296 04 839 bekannt. Ebenso offenbaren die DE 30 44 949 A1 die FR 2 719 622 A1 und die DE 196 64 117 C1 derartige Profile. So offenbart die DE19664117C1 die technischen Merkmale der Präambel des Anspruchs 1. Auch aus der EP 2 295 676 A2 sind derartige Profile bekannt.

Um aus diesen Profilen Schwimmbadabdeckungen zu bilden, werden über Längsbefestigungsnuten mehrere derartiger Profile miteinander gelenkig verbunden, sodass diese in Art eines Rollladens über ein Schwimmbad abgerollt werden können. In der Regel sind hierbei die Profile an Ihrer Längsseite asymmetrisch ausgebildet und weisen an der einen Längsseite die Befestigungsnut und an der anderen Längsseite eine korrespondierende, längs angeordnete Feder auf, die in der Regel einen hakenförmigen Querschnitt aufweist und in entsprechende korrespondierende Ausformungen der Längsbefestigungsnut eingreifen kann. Beispielsweise die FR 2 795 117 A1 nutzt jedoch hinsichtlich der Längsseiten symmetrische Profile, sodass an beiden Längsseiten Längsbefestigungsnuten vorgesehen sind, in welche eine doppelseitig wirksame Feder als separate Baugruppe eingeführt werden kann.

In der Regel weisen die jeweiligen Profile mehrere Längskanäle auf, von welchen wenigstens einer an der Vorderseite und an der Hinterseite abgedichtet ist, sodass ein entsprechend längs angeordneter Hohlkörper gebildet wird, wodurch das jeweilige Profil auf einer Wasseroberfläche aufschwimmen kann. Hierbei versteht es sich, dass ggf. auch lediglich ein einziger Längskanal vorgesehen sein kann, der entsprechend abgedichtet ist, bzw. dass vorzugsweise sämtliche Längskanäle entsprechend abgedichtet sind, um einen maximalen Auftrieb zu gewährleisten.

Entsprechend der Auflage der jeweiligen Profile auf der Wasseroberfläche wird in vorliegendem Zusammenhang bei den Profilen hinsichtlich der dem Wasser zugewandten horizontalen Seite von einer Unterseite und hinsichtlich der der Wasseroberfläche abgewandten Seite von einer Oberseite gesprochen. Dementsprechend kann bei derartigen Profilen auch ein "oben" und "unten" definiert werden. Da die Profile in der Regel erheblich länger als breiter ausgebildet sind, bezeichnet die längere Erstreckungsrichtung die Länge des Profils, während senkrecht hierzu und ebenfalls horizontal, insbesondere wenn das Profil auf einer Wasseroberfläche aufliegt, eine Breite definiert ist. Dementsprechend bezeichnet die Längsseite eine im Wesentlichen vertikal ausgerichtete Seite, welches sich längs des Profils erstreckt, während die Vorder- und Hinterseiten ebenfalls im Wesentlichen vertikal ausgerichtet sind und sich über die Breite des Profils erstrecken. Von oben nach unten bzw. von unten nach oben kann den Profilen dementsprechend eine Höhe zugeordnet werden. Diese geometrischen Verhältnisse gelten auch dann, wenn ein entsprechendes Profil leicht gewölbt ist, wie dieses beispielsweise in der DE 30 44 949 A1 der Fall ist, da eine derartige Wölbung in der Regel lediglich dazu dient, ein Aufrollen der aus dem entsprechenden Profilen zusammengesetzten Schwimmbadabdeckung zu erleichtern. In diesem Fall ist davon auszugehen, dass die entsprechenden geometrischen Verhältnisse bei einem der Wölbung folgenden Horizont anzusetzen sind.

Zu Schwimmbadabdeckungen zusammengefügt dienen diese Profile einerseits der Abdeckung des Schwimmbads oder einer sonstigen Wasseroberfläche, um eine Verdunstung und somit einen unnötig großen Wasserverlust zu minimieren. Durch die mit Luft gefüllten Längskanäle dienen die Profile darüber hinaus einer Isolierung der Wasseroberfläche zur Umgebung, wobei insbesondere der wenigstens teilweise oberhalb der Längsbefestigungsnut angeordnete Längskanal hier entsprechend isolierend wirksam ist.

Hierbei gibt es Schwimmbadabdeckungen, welche auch zur solarthermischen Temperierung von Schwimmbädern genutzt werden sollen, wie diese beispielsweise in der DE 196 46 117 C1, der DE 101 03 204 A1 oder in der EP 2 295 676 A2 offenbart sind. Bei diesen Schwimmbadabdeckungen und den entsprechenden Profilen ist die Oberseite transparent und die Unterseite undurchsichtig, vorzugsweise möglichst dunkel oder sogar schwarz, ausgestaltet, sodass Licht einfallen und von der Unterseite absorbiert werden kann. Die entsprechende Wärme wird dann an das Wasser abgegeben.

Andererseits sind Schwimmbadabdeckungsprofile bekannt, bei denen eine solarthermische Temperierung nicht im Vordergrund steht. Diese Profile dienen insbesondere der thermischen und mechanischen Isolierung der Wasseroberfläche und werden - auch wegen eines entsprechend ansprechenden Äußeren - häufig transparent ausgeführt. Auf diese Weise kann etwa einfallendes Licht durch die transparente Schwimmbadabdeckung hindurch in das Wasser gelangen und dort möglicherweise thermisch aktiv werden. Ebenso kann ein Blick durch die transparente Schwimmbadabdeckung geworfen werden, um so einen Eindruck von dem unter der Schwimmbadabdeckung befindlichen Wasser sowie von weiteren Dingen, die sich unter der Schwimmbadabdeckung befinden, wie beispielsweise von einer bestimmte Beleuchtung oder von in der Beckenwand befindlichen Mustern oder Ähnlichem, gewinnen zu können. Obgleich dann die entsprechenden Schwimmbadabdeckungsprofile transparent gewählt sind, können sie dennoch in einem bestimmten Farbton gehalten sein, beispielsweise transparent-grün, transparent-blau, transparent-gelb oder transparent-rosa. Allerdings sind auch transparente Schwimmbadabdeckungsprofile am Markt bekannt, die farblos sind.

Es ist Aufgabe vorliegender Erfindung, gattungsgemäße transparente Schwimmbadabdeckungsprofile derart auszugestalten, dass auch nach längerer Benutzungszeit ein möglichst ansprechendes Erscheinungsbild gewährleistet ist.

Die Aufgabe der Erfindung wird durch transparente Schwimmbadabdeckungsprofile mit den Merkmalen des Anspruchs 1 gelöst. Weitere, ggf. auch unabhängig hiervon, vorteilhafte Ausgestaltungen finden sich in den Unteransprüchen sowie der nachfolgenden Beschreibung.

So kann ein möglichst ansprechendes Erscheinungsbild, auch nach längerer Benutzungszeit, bei einem transparenten Schwimmbadabdeckungsprofil mit wenigstens einem Längskanal sowie mit wenigstens einer Längsbefestigungsnut an einer Längsseite, wobei der Längskanal wenigstens teilweise oberhalb der Längsbefestigungsnut angeordnet ist, dadurch gewährleistet werden, dass zumindest eine untere, zur Längsbefestigungsnut gerichtete Seite des Längskanals wenigstens teilweise opak ausgebildet ist.

Kumulativ bzw. alternativ hierzu kann bei einem transparenten Schwimmbadabdeckungsprofil mit wenigstens einem Längskanal sowie mit wenigstens einer Längsbefestigungsnut an einer Längsseite, wobei der Längskanal wenigstens teilweise oberhalb der Längsbefestigungsnut angeordnet ist, ein möglichst ansprechendes Erscheinungsbild, auch nach längerer Benutzungszeit, gewährleistet werden, wenn zumindest eine obere Wandung der Längsbefestigungsnut wenigstens teilweise opak ausgebildet ist.

Vorzugsweise ist die Längsbefestigungsnut zur Gänze unterhalb des entsprechenden Längskanals oder aber ergänzend unter anderen Längskanälen, die ebenfalls wenigstens teilweise ober der Längsbefestigungsnut angeordnet sind, vorgesehen, so dass eine gute thermische Isolation der Schwimmbadabdeckung insbesondere auch im Bereich der Längsbefestigungsnut gewährleistet werden kann.

Durch die opake Ausbildung der unteren, zur Längsbefestigungsnut gerichteten Seite des Längskanals bzw. der Wandung der Längsbefestigungsnut wird in den opaken Bereichen ein Blick auf darunter liegende Gebiete der Längsbefestigungsnut oder auch sonstige Baugruppen oder anderer Dings, welche sich unter diesen Bereichen befinden, verhindert bzw. deutlich erschwert, sodass beispielsweise Schmutzpartikel, welche sich unter diesen Bereichen ansammeln, nicht zu erkennen sind. Hierdurch kann das Erscheinungsbild, auch nach längerer Benutzungszeit, möglichst ansprechend erhalten werden.

Dieses gilt insbesondere dann, wenn die obere Wandung der Längsbefestigungsnut zumindest in ihrem opak ausgebildeten Bereich von dem Längskanal, der wenigstens teilweise oberhalb der Längsbefestigungsnut angeordnet ist, überdeckt wird. Die transparente Oberseite dieses wenigstens teilweise oberhalb der Längsbefestigungsnut angeordneten Längskanals mindert einen möglicherweise störenden Einfluss der opaken Bereiche auf das Gesamterscheinungsbild es entsprechenden transparenten Schwimmbadabdeckungsprofils.

Es hat sich herausgestellt, dass insbesondere in der Längsbefestigungsnut gern Schmutzablagerungen oder Ähnliche, das Erscheinungsbild trübende Anordnungen, wie beispielsweise Algen, zu finden sind, sodass gerade durch die opaken Bereiche der unteren, zur Längsbefestigungsnut gerichteten Seite des Längskanals bzw. der oberen Wandung der Längsbefestigungsnut ein ansprechendes Äußeres auf verhältnismäßig einfache Weise auch bei längerer Benutzungszeit gewährleistet werden kann. Unterhalb der Schwimmbadabdeckung selbst können beispielsweise durch Filtersysteme und umlaufendes Wasser sowie durch die ohnehin üblichen Reinigungsarbeiten am Grund und am Rand des Schwimmbads oder eines Teichs ansprechende Erscheinungsbilder verhältnismäßig einfach aufrechterhalten werden. Da jedoch die Schwimmbadabdeckungsprofile über die Längsbefestigungsnuten und zugehörige Federn, wie insbesondere Haken zusammengesetzt sind, ist ein Zugriff in die Längsbefestigungsnuten, um dort reinigend einzugreifen, sehr aufwendig.

Je nach Grad der Opazität kann die Abdeckung der Längsbefestigungsnut auch derart umfassend sein, dass ein etwaiges Algenwachstum in der Längsbefestigungsnut wirksam minimiert werden kann, was dementsprechend zur Gewährleistung eines möglichst ansprechenden Erscheinungsbildes, auch nach längerer Benutzungszeit, beiträgt.

Aus dem vorstehend genannten Grund ist es insbesondere von Vorteil, wenn die gesamte untere, zur Längsbefestigungsnut gerichtete Seite des Längskanals bzw. die gesamte obere Wandung der Längsbefestigungsnut opak ausgebildet ist. Hierdurch kann eine entsprechende Blickdichtheit oder aber auch, bei geeigneter Opazität, eine ausreichende Abdunkelung ermöglicht werden, um das möglichst ansprechende Erscheinungsbild auch über längere Zeit gewährleisten zu können.

Letzteres gilt insbesondere dann, wenn sämtliche zur Längsbefestigungsnut gerichtete Seiten des Längskanals opak ausgebildet sind, da dann die Längsbefestigungsnut dementsprechend optisch von der Oberseite des Schwimmbadabdeckungsprofil bzw. der Schwimmbadabdeckung getrennt ist. Dieses gilt ebenso, wenn sämtliche zu dem Längskanal gerichteten Wandungen der Längsbefestigungsnut opak ausgebildet sind. Insbesondere können auch sämtliche Wandungen der Längsbefestigungsnut opak ausgebildet sein, wodurch eine besondere Blickdichtheit, aber auch insbesondere ein etwaiges Algenwachstum fördernder Lichteinfall in die Längsbefestigungsnut, besonders wirksam auf ein Minimum reduziert werden können.

Andererseits versteht es sich, dass gerade, wenn eine Blickdichtheit im Vordergrund steht, nicht sämtliche Wandungen der Längsbefestigungsnut bzw. sämtliche zu der Längsbefestigungsnut gerichteten Seiten des wenigstens teilweise oberhalb der Längsbefestigungsnut angeordneten Längskanals opak ausgebildet sein müssen. Vielmehr können insbesondere seitliche Seiten durchaus weiterhin transparent belassen bleiben, da in der Regel eine Blickrichtung durch verhältnismäßig viel transparenten Material geht, sodass letztlich schon die transparente Wandung der seitlichen Seiten einen ausreichenden Blickschutz darstellt.

In diesem Zusammenhang sei erläutert, dass entsprechend der bereits eingangs erläuterten geometrischen Verhältnisse die untere, zur Längsbefestigungsnut gerichtete Seite des Längskanals bzw. die obere Wandung der Längsbefestigungsnut nicht zwingend zur Gänze horizontal ausgerichtet sein bzw. einem gewölbten Horizont mit derselben Wölbung folgen müssen. In vorliegendem Zusammenhang werden Seiten oder Wandungen als horizontal bezeichnet, wenn ihre Hauptrichtungskomponente horizontal verläuft, das heißt, wenn die entsprechenden Seiten oder Wandungen weniger als 45° gegenüber der horizontalen bzw. gegenüber einem entsprechend gewölbten Horizont geneigt sind. Insofern werden dann horizontale Seiten und Wandungen als Unterseiten bzw. untere Seiten oder Wandungen bezeichnet, wenn sie unten zu finden sind, und als Oberseiten bzw. obere Seiten oder Wandungen bezeichnet, wenn sie oben zu finden sind. Dementsprechend sind seitliche oder vertikale Seiten oder Wandungen mit einem Winkel von mehr als 45 Grad gegenüber der Horizontalen bzw. gegenüber dem gewölbten Horizont geneigt. Insofern kann dementsprechend eine Wandung oder Seite mit einem gewölbten Querschnitt einerseits eine obere Wandung bis zu einem Neigungswinkel von 45 Grad gegenüber der Horizontalen bzw. gegenüber dem gewölbten Horizont und andererseits eine seitliche oder vertikale Wandung bei größerem Neigungswinkel darstellen und mithin definitionsgemäß, obgleich die Wölbung möglicherweise durchgängig gleichförmig und stetig ist, zwei unterschiedliche Wandungen bzw. Seiten darstellen.

Wie bereits vorstehend erläutert, ist häufig an einer der Längsbefestigungsnut gegenüberliegenden Längsseite des Schwimmbadabdeckungsprofils eine mit der Längsbefestigungsnut korrespondierende Feder, in der Regel in der Form eines Hakens, angeordnet. Auf diese Weise können mehrere Schwimmbadabdeckungsprofile dann zu einer Schwimmbadabdeckung zusammengesetzt werden, die, insoweit die Nut-Feder-Verbindung entsprechend ausgelegt ist, dann aufgerollt werden kann, um das Schwimmbad oder eine sonstige Wasserfläche wahlweise freizugeben. Es versteht sich, dass ggf. auch eine doppelte Feder zur Anwendung kommen kann, wenn beidseits des Schwimmbadabdeckungsprofils Längsbefestigungsnuten vorgesehen sind.

Gegebenenfalls sind auch die Feder bzw. der Haken zumindest teilweise opak ausgebildet, sodass auf diese Weise ergänzend oder alternierend ein Blickschutz, zumindest teilweise, auch durch die Feder bzw. den Haken dargestellt sein kann. Auch kann ein opaker Bereich der Feder entsprechend abdunkelnd wirken und somit ein mögliches Algenwachstum, insbesondere in der Längsbefestigungsnut, minimieren.

Aus Gründen einer konstruktiven Vereinfachung erscheint es vorteilhaft, wenn die Feder bzw. der Haken zur Gänze opak ausgebildet sind. Der entsprechend größere opake Bereich wirkt dann auch dementsprechend wirksamer als Blickschutz bzw. als Lichtabdeckung, wobei an sich die Opazität der Feder bzw. des Hakens - je nach konkreter Umsetzung - hinsichtlich des Gesamterscheinungsbildes nicht so sehr von Bedeutung sein wird, da letztlich zumindest Teile dieser opaken Bereiche unterhalb opaker Bereiche der Wandung der Längsbefestigungsnut bzw. der unteren, zur Längsbefestigungsnut gerichteten Seite des Längskanals zu finden sein werden.

Kumulativ bzw. alternativ hierzu kann eine vertikale Seite eines Längskanals, an welcher die Feder bzw. der Haken angeordnet ist, zumindest teilweise opak ausgebildet sein. Diese vertikale Seite des Längskanals, an welchem die Feder angeordnet ist, kann dann insbesondere im Bereich der offenen Seite der Längsbefestigungsnut entsprechend als Blickschutz bzw. als Schutz gegen übermäßigen Lichteinfall dienen, wie dieses für andere vertikale Seiten bzw. Wandungen bereits vorstehend erläutert wurde.

Vorzugsweise ist die vorstehend erläuterte vertikale Seite zumindest von der Feder bzw. von dem Haken ausgehend bis zu einer Unterseite des Längskanals opak ausgebildet. Dieses erscheint insbesondere dann sinnvoll, wenn andererseits eine vertikale Wandung der Längsbefestigungsnut, welche dieser vertikalen Seite zugewandt ist, nicht opak ausgebildet ist.

Um das transparente Erscheinungsbild des Schwimmbadabdeckungsprofils bzw. der zugehörigen oder hieraus gebildeten Schwimmbadabdeckung nicht unnötig zu beeinträchtigen, da dieses nach wie vor im Vordergrund steht und Schwimmbadabdeckung als solches nach wie vor im wesentlichen transparent bleiben soll, ist es von Vorteil, wenn der opake Anteil des Schwimmbadabdeckungsprofils von oben gesehen 40 % nicht übersteigt. Erfindungsgemäß übersteigt der opake Anteil von unten gesehen nicht 40%. Auf den ersten Blick erscheint dieser Wert verhältnismäßig hoch, wobei jedoch zu berücksichtigen ist, dass hier eine etwaige Opazität der Feder bzw. des Hakens einerseits und im Gebiet der Längsbefestigungsnut andererseits Berücksichtigung finden muss, was bei Schwimmbadabdeckungsprofilen, die dementsprechend dann zu einer Schwimmbadabdeckung zusammengesetzt sind, dazu führt, dass aufgrund der Überlappung von Feder und Längsbefestigungsnut der opake Anteil der Schwimmbadabdeckungsprofile von oben oder unten gesehen 20 % nicht übersteigen sollte.

Dementsprechend ist es von Vorteil, wenn der opake Anteil längskanalseitig und/oder federseitig von oben oder unten gesehen 20 % nicht übersteigt, insbesondere um den vorstehend genannten Zielwert möglichst einhalten zu können bzw. um das transparente Erscheinungsbild weitmöglichst zu erhalten.

Es versteht sich, dass der opake Anteil weiter in den Hintergrund tritt, wenn der opake Anteil des Schwimmbadabdeckungsprofils von oben oder unten gesehen 38 % bzw 36 % nicht übersteigt. Dementsprechend ist es unabhängig hiervon, ggf. aber auch kumulierend hierzu von Vorteil, wenn der opake Anteil längskanalseitig und/oder federseitig von oben oder unten gesehen 19 % bzw. 18 % nicht übersteigt.

Derartige Schwimmbadabdeckungsprofile werden auf ihrer in Längsrichtung zu findenden Symmetrie in der Regel durch entsprechende längs gerichtete Herstellungsverfahren bereitgestellt, wobei hierfür insbesondere Spritzguss geeignet erscheint. Besonders bevorzugt, erfolgt ein Spritzguss aus Kunststoffen, wobei schon aus Kostengründen bei herkömmlichen, transparenten Schwimmbadabdeckungsprofilen lediglich ein Material zur Anwendung kommt, da derartige transparente Schwimmbadabdeckungsprofile letztlich in herkömmlicher Weise in allen Bereichen gleichförmig transparent ausgebildet sind.

Entsprechende Kunststoffe können insbesondere Thermoplaste vorzugsweise mit einem Schmelzpunkt von 90° C oder höher sein. Als Kunststoff kommen insbesondere PC (Polycarbonat), PVC (Polyvinylchlorid) oder PET (Polyethylenterephthalat) in Frage, wobei sich PC wegen seiner thermischen Beständigkeit als besonders geeignet herausgestellt hat.

In Abweichung von dieser herkömmlichen Herstellungsweise wird durch die opaken Bereiche, welche vorgesehen sein sollen, in Kauf genommen, dass ein zweites Material, das zwar die identische chemische Grundzusammensetzung aufweisen kann, aber eine andere Färbung bzw. andere Einlagerungsstoffe aufweist, verarbeitet werden muss. Dieses geschieht, obgleich gerade eine etwaige solarthermische Funktionalität gerade nicht notwendig erscheint, und entgegen des grundsätzlichen Bedürfnisses, derartige Schwimmbadabdeckungsprofile, die als Massenware in sehr großer Stückzahl bereitgestellt werden müssen, möglichst kostengünstig bereitzustellen. Um ein möglichst ansprechendes Erscheinungsbild, auch nach längerer Benutzungszeit zu gewährleisten, werden mithin erhebliche Mehrkosten in Kauf genommen, die nicht nur in der laufenden Produktion anfallen, da entsprechend zwei Ausgangsmaterialien zur Anwendung kommen oder besondere Maßnahmen zum Erreichen einer Opazität von Bereichen durchgeführt werden müssen und da der folgende Spritzvorgang wesentlich komplexer und störanfälliger ist, weil diese Ausgangsmaterialien betriebssicher miteinander eine ausreichend feste Verbindung eingehen müssen. Vielmehr entstehen auch erheblich höhere Werkzeugkosten, da für die unterschiedlichen Materialien auch unterschiedliche Materialzufuhren vorgesehen sein müssen, sodass für das Spritzen auch komplexere Spritzgussmaschinen, nämlich mit wenigstens zwei Extrudern, zur Anwendung kommen müssen.

Vorzugsweise übersteigt der opake Masseanteil, der in dem Schwimmbadabdeckungsprofil zu finden ist, 30 %, insbesondere 28 % der Gesamtmasse, also der Summe aus transparenten und opaken Massenanteilen, nicht. Auf diese Weise kann gewährleistet werden, dass der transparente Masseanteil überwiegt und die Möglichkeit besteht, dem Schwimmbadabdeckungsprofil bzw. der hieraus zusammengesetzten Schwimmbadabdeckung ein im Wesentlichen transparentes äußeres Erscheinungsbild zu geben.

Letzteres kann insbesondere dann gewährleistet werden, wenn die Oberseite sämtlicher Längskanäle transparent ausgebildet ist. Da letztlich die Oberseite einem Betrachter zugewandt ist, kann hierdurch ein möglichst transparentes Erscheinungsbild am ehesten gewährleistet werden, wobei insbesondere durch die oberhalb der Längsbefestigungsnut angeordneten Bereiche des entsprechenden Längskanals auch dort ein transparentes Erscheinungsbild an der Oberseite gewährleistet werden kann, wenn die Oberseite des entsprechenden Längskanals dementsprechend transparent ausgebildet ist.

Ebenso kann eine möglichst große Transparenz gewährleistet werden, wenn die Unterseite sämtlicher Längskanäle, abgesehen von der unteren, zur Längsbefestigungsnut gerichteten Seite des wenigstens teilweise oberhalb der Längsbefestigungsnut angeordneten Längskanals zumindest zu 90 % transparent ausgebildet ist. Auf diese Weise kann ein Lichtdurchlass zu großen Teilen durch das transparente Schwimmbadabdeckungsprofil bzw. durch die entsprechende transparente Schwimmbadabdeckung gewährleistet werden.

Insbesondere können natürlich die Unterseiten zumindest einiger Längskanäle zu 100 % transparent ausgebildet sein. Gerade in Übergängen, in denen beispielsweise eine opake Wandung oder eine opake Seite an eine transparente Unterseite stoßen, kann jedoch, insbesondere aus Gründen einer guten Festigkeit, ein kleiner Bereich auch der Unterseiten opak statt transparent ausgebildet sein, ohne dass hierdurch der im Wesentlichen transparente Charakter des Schwimmbadabdeckungsprofils oder einer hieraus zusammengesetzten Schwimmbadabdeckung als Ganzes leidet.

Dementsprechend ist es von Vorteil, wenn die Unterseite des Schwimmbadabdeckungsprofils zumindest zu 90 % transparent ausgebildet ist, was dann insgesamt zu einem möglichst transparenten Erscheinungsbild beiträgt.

Vorzugsweise weisen die transparenten Wandungen und Seiten des Schwimmbadabdeckungsprofils sowie die opaken Wandungen und Seiten bzw. die entsprechenden transparenten Bereiche und die opaken Bereiche des Schwimmbadabdeckungsprofils jeweils einen übereinstimmenden Farbton auf, wodurch ein entsprechendes gleichförmiges und transparent erscheinendes äußeres Erscheinungsbild gewährleistet werden kann, da dann die opaken Bereiche weniger auffallen und der jeweils transparente Farbton im Vordergrund steht. Auf dieser Weise kann das transparente Erscheinungsbild der gesamten transparenten Schwimmbadabdeckung verstärkt werden. Andererseits versteht es sich, dass ggf. auch bewusst Farbabweichungen gewählt werden können, um auf diese Weise besondere gestalterische Effekte gewährleisten zu können. Hierbei verbleibt es jedoch als wesentlich, das opake Bereiche von Wandungen der Längsbefestigungsnut bzw. der Seiten von Längskanälen vorgesehen sind, die als Blickschutz oder auch zur Minderung eines Lichteinfalls genutzt werden können.

Andererseits steht bei derartige transparenten Schwimmbadabdeckungen und den zugehörigen Schwimmbadabdeckungsprofilen eine solarthermische Wirkung, wie sie bei entsprechenden Solarprofilen mit möglichst dunklen Unterseiten im Vordergrund steht, gerade nicht Im Vordergrund, so dass es insbesondere nicht zwingend ist, die opaken Bereich möglichst dunkel auszugestalten oder ergänzende bauliche Maßnahmen vorzusehen, um den solarthermischen Wirkungsgrad zu maximieren. Vorliegend ist es von Vorteil, wenn der Schwerpunkt hinsichtlich der Farbwahl und deren Intensität und Farbhelligkeit der Schwerpunkt nicht auf die möglichst große Absorptionsfähigkeit der opaken Bereiche sondern auf eine gute Blickdichtigkeit und Lichtdurchlässigkeit in Verbindung mit einem ansprechenden Äußeren insbesondere wenn diese opaken Bereiche durch transparente Bereich hindurch erkennbar bzw. sichtbar sind.

Durch den zumindest teilweise oberhalb der Längsbefestigungsnut vorgesehen Längskanal kann die isolierende Wirkung der Schwimmbadabdeckung optimiert werden, da thermische Verluste durch etwaiges Wasser in der Längsbefestigungsnut minimiert werden können, weil der Längskanal oberhalb der Längsbefestigungsnut noch entsprechend isolierend wirksam ist.

Wie bereits vorstehend angedeutet, können opake Bereiche bei Schwimmbadabdeckungsprofilen auf unterschiedliche Weise bereitgestellt werden. Insbesondere über einen Extrusions- bzw. Stranggussprozess können opake Bereiche durch Verw2endung opaker Ausgansmaterialien bzw. durch Beimengung entsprechend lichtbrechend wirkender Stoffe dargestellt werden. Andererseits muss eine Opakisierung des Materials nicht zwingend durchgängig über eine ganze Wandstärke erfolgen. Vielmehr können beispielsweise entsprechende Materialien, oder beispielsweise auch Folien, auch aufgetragen oder Oberflächen derart verändert, beispielsweise angeraut, werden, um opake Bereiche bereitstellen zu können.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

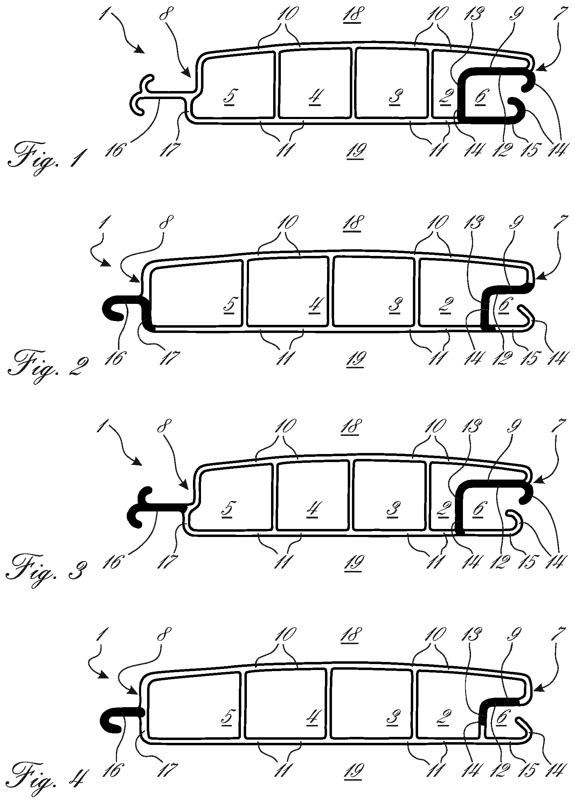

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen: Figuren 1 bis 7 schematische Querschnitte durch Schwimmbadabdeckungsprofile.

Die in den Figuren 1 bis 7 dargestellten Schwimmbadabdeckungsprofile 1 erstrecken sich jeweils senkrecht zur Zeichenebene. Sie weisen Längskanäle 2, 3, 4, 5 sowie jeweils eine Längsbefestigungsnut 6 auf, die an einer Längsseite 7 des jeweiligen Schwimmbadabdeckungsprofils 1 vorgesehen ist.

Die Längskanäle 2, 3, 4, 5 werden dann jeweils in an sich bekannter Weise an ihrer Vorderseite und an ihrer Hinterseite abgedichtet, sodass jeweils ein entsprechend längs angeordneter Hohlkörper gebildet wird und das entsprechende Schwimmbadabdeckungsprofil 1 auf einer Wasseroberfläche aufschwimmen kann.

An einer der Längsbefestigungsnut 6 bzw. der Längsseite 7 gegenüber liegenden Längsseite 8 des Schwimmbadabdeckungsprofils 1 ist eine Feder 16 in Form eines Hakens angeordnet. Diese hakenförmige Feder korrespondiert derart mit der Längsbefestigungsnut 6, dass die entsprechenden Schwimmbadabdeckungsprofile 1 über die Nut-Feder-Verbindung aus der Längsbefestigungsnut 6 und der Feder 16 zu einer Schwimmbadabdeckung zusammengefügt werden können, wobei diese Nut-Feder-Verbindung derart beweglich gestaltet ist, dass die Schwimmbadabdeckung auf- und abgerollt werden kann, während auf Stoß bei abgerollten Schwimmbadabdeckungsprofiulen 1 dann eine gewisse Stabilisierung der entsprechenden Schwimmbadabdeckung erfolgt.

Bei den Ausführungsbeispielen nach Figuren 1, 3, 5 und 7 ist die Feder 16 als Doppelhaken ausgestaltet, wobei die Längsbefestigungsnut 6 zwei seitliche bzw. vertikale Wandungen 14 aufweist, die an der Längsseite 7 die Nutöffnung von oben 18 bzw. von unten 19 überdecken. Bei den in Figuren 2, 4 und 6 dargestellten Ausführungsbeispielen hingegen ist die Feder 16 als einfacher Haken ausgestaltet, sodass die Längsbefestigungsnut 6 an der Längsseite 7 lediglich eine vertikale Wandung 14, welche von unten 19 nach oben 18 ragt, aufweist.

Entsprechend der vorstehenden Definition von "oben" 18 und "unten" 19, weist das Schwimmbadabdeckungsprofil 1 und mithin auch die aus derartigen Schwimmbadabdeckungsprofilen 1 zusammengesetzten Schwimmbadabdeckung eine Oberseite 10 und eine Unterseite 11 auf. Dementsprechend kann auch den Längskanälen 2, 3, 4, 5 eine Oberseite 10 und eine Unterseite 11 zugeordnet werden. Selbiges gilt auch für die Längsbefestigungsnut 6, welcher eine untere Wandung 15 zugeordnet werden kann.

Sämtliche Ausführungsbeispiele haben gemein, dass der Längskanal 2 wenigstens teilweise oberhalb der Längsbefestigungsnut 6 angeordnet ist. Bei vorliegenden Ausführungsbeispielen überdeckt dieser Längskanal 2 die gesamte Längsbefestigungsnut 6 zur Gänze, wodurch eine sehr gute thermische Isolation der Wasseroberfläche gewährleistet werden kann. Auch kann, wie nachfolgend noch erläutert werden wird, das optische Erscheinungsbild auf diese Weise verhältnismäßig gleichförmig ausgebildet sein.

Es versteht sich, dass in abweichenden Ausführungsbeispielen der Längskanal 2 auch zur Gänze oberhalb der Längsbefestigungsnut 6 angeordnet sein kann, wobei diesem dann eine Unterseite 11, welche mit der Unterseite 11 des Schwimmbadabdeckungsprofils 1 korrespondiert, nicht zugeordnet werden kann.

Unabhängige hiervon weist jedoch der wenigstens teilweise oberhalb der Längsbefestigungsnut 6 angeordnete Längskanal 2 aller Ausführungsbeispiele eine untere Seite 9 auf, welche zur Längsbefestigungsnut 6 hin gerichtet ist.

Dementsprechend weist die Längsbefestigungsnut 6 aller Ausführungsbeispiele eine obere Wandung 12 auf, welche bei allen Ausführungsbeispielen ihrerseits zu dem wenigstens teilweise oberhalb der Längsbefestigungsnut 6 angeordneten Längskanal 2 gerichtet ist.

Darüber hinaus weist bei vorliegenden Ausführungsbeispielen der wenigstens teilweise oberhalb der Längsbefestigungsnut 6 angeordnete Längskanal 2 eine seitliche bzw. vertikale Seite 13 auf, welche zur Längsbefestigungsnut 6 gerichtet ist. Auch ist eine seitliche bzw. vertikale Wandung 14 der Längsbefestigungsnut 6 bei allen Ausführungsbeispielen zu dem Längskanal 2, der wenigstens teilweise oberhalb der Längsbefestigungsnut 6 angeordnet ist, vorgesehen.

Wie unmittelbar ersichtlich, weisen sämtliche Längskanäle 2, 3, 4, 5 vertikale Seiten 17 (lediglich in Bezug auf dem Längskanal 5 beziffert) auf, wobei die Feder 16 jeweils an der vertikalen Seite 17 des Längskanals 5, welche an der Längsseite 8 zu finden ist, angeordnet ist. Ein Teil der vertikalen Seiten 17 befindet sich im Inneren des Schwimmbadabdeckungsprofils 1, sodass sich die Längskanäle 2, 3, 4, 5 jeweils einige der vertikalen Seiten 17 teilen.

Die vorstehend erläuterten geometrischen Verhältnisse entsprechen der Anordnung des Schwimmbadabdeckungsprofils 1 auf einer Wasseroberfläche, sodass die Unterseite 11 bzw. "unten" 19 mit dem Wasser in Kontakt kommt, während die Oberseite 10 bzw. "oben" 18 vom Wasser wegweisen.

Bei allen Ausführungsbeispielen ist die untere, zur Längsbefestigungsnut 6 gerichtete Seite 9 des Längskanals 2 wenigstens teilweise opak ausgebildet. Während bei den Ausführungsbeispielen nach Figuren 1 bis 3 und 5 bis 7 hierdurch die gesamte untere, zur Längsbefestigungsnut 6 gerichtete Seite 9 des Längskanals 2 ein opakes Erscheinungsbild hat, ist bei dem Ausführungsbeispiel nach Figur 4 ein kleiner, der Längsseite 7 zugewandter Bereich der unteren, zur Längsbefestigungsnut 6 gerichteten Seite 9 des Längskanals 2 transparent ausgebildet.

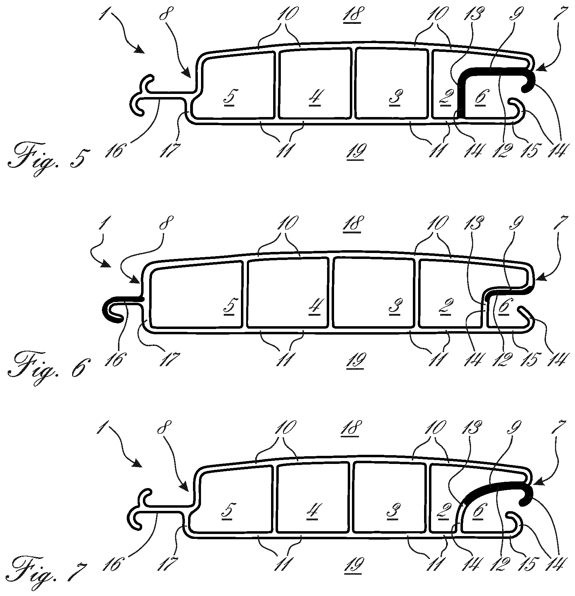

Auch die untere, zur Längsbefestigungsnut 6 gerichtete Seite 9 des Längskanals 2 des Ausführungsbeispiels nach Figur 6 ist lediglich teilweise - und zwar der Längsbefestigungsnut 6 zugewandt - opak ausgebildet, während sie im Übrigen noch transparent ist. Hierdurch kann eine besonders enge materielle Verbindung zwischen dem opaken Material und dem transparenten Material gewährleistet werden, obgleich die gesamte Seite 9 nach wie vor opak erscheint.

Dementsprechend ist bei allen Ausführungsbeispielen die obere Wandung 12 der Längsbefestigungsnut 6 wenigstens teilweise opak ausgebildet. Bei dem Ausführungsbeispiel nach Figur 4 verbleibt ein transparenter Teil in Richtung auf die Längsseite 7, während die Wandung 12 der Längsbefestigungsnut 6 des Ausführungsbeispiels nach Figur 6 zwar zur Gänze opak erscheint, jedoch in sich zur Hälfte aus transparenten Material besteht, was dementsprechend, wie bereits vorstehend erläutert, eine besonders innige Verbindung zwischen opakem und transparentem Material gewährleistet.

Bei dem Ausführungsbeispielen nach Figuren 1 bis 3 und 5 sind sämtliche zur Längsbefestigungsnut 6 gerichteten Seiten 9, 13 des Längskanals 2 bzw. sämtliche, zu dem Längskanal gerichtete Wandungen 12, 14 der Längsbefestigungsnut 6 opak ausgebildet.

Bei den Ausführungsbeispielen nach Figuren 4, 6 und 7 hingegen sind zumindest Teile der vertikalen Wandung 14 bzw. der vertikalen, zur Längsbefestigungsnut 6 gerichteten Seite 13 des Längskanals 2 transparent ausgebildet.

Darüber hinaus ist bei dem Ausführungsbeispiel nach Figur 1 auch die untere Wandung 15 der Längsbefestigungsnut 6 opak ausgebildet, wobei bei diesem Ausführungsbeispiel auch die vertikalen Wandungen 14 der Längsbefestigungsnut 6, welche der Längsseite 7 zugewandt sind, opak ausgebildet sind. Besonders diese Ausgestaltung, aber auch die Ausgestaltung nach Figur 5 ermöglichen es, die Feder 16 bzw. den zugehörigen Haken transparent zu belassen, da davon ausgegangen wird, dass hierdurch ein ausreichender Blickschutz bzw. ein ausreichender Schutz gegen unnötigen Lichteinfall zur Vermeidung von Algenbildung gewährleistet werden kann.

Es versteht sich, dass die verschiedenen Ausgestaltungen hinsichtlich der Verteilung des opaken Materials im Bereich der Längsbefestigungsnut 6 bzw. des Längskanals 2 zwischen den Ausführungsbeispielen auch ggf. ausgetauscht werden können.

Bei den Ausführungsbeispielen nach Figuren 2 bis 4 und 6 ist darüber hinaus auch die Feder 16 zumindest teilweise opak ausgebildet. Hierbei ist bei dem Ausführungsbeispiel nach Figur 6 ähnlich wie bei der Wandung 12 bzw. der Seite 9 die Feder 16 lediglich mit halber Materialstärke opak ausgestaltet, während der Rest aus transparenten Material besteht, was eine besonders innige Verbindung ermöglicht.

Wie unmittelbar ersichtlich, übersteigt der opake Anteil längskanalseitig und/oder federseitig von oben 18 oder unten 19 gesehen 20 % nicht.

Auch der opake Masseanteil liegt bei allen Ausführungsbeispielen weit unter 30 %.

Darüber hinaus sind die Oberseiten 10 sämtlicher Längskanäle 2, 3, 4, 5 transparent ausgebildet, sodass ein möglichst transparenten optisches Erscheinungsbild gewährleistet werden kann.

Mit Ausnahme des Ausführungsbeispiels nach Figur 1 sind die Unterseiten 10 des Schwimmbadabdeckungsprofils 1 bzw. sämtlicher Längskanäle 2, 3, 4, 5 und der Längsbefestigungsnut 6 zumindest zu 90 % transparent ausgebildet, da lediglich in Bereichen, an denen eine vertikale Wandung 14 oder Seite 13 an eine Unterseite 10 oder untere Wandung 15 stößt, bei den Ausführungsbeispielen nach Figuren 2 und 3 ein kleiner Überstand vorgesehen ist, der letztlich im Wesentlichen einer stabilen Materialverbindung dient und ansich nur einen geringen Einfluss auf das transparente Erscheinungsbild hat.

Bei dem Ausführungsbeispiel nach Figur 2 ist darüber hinaus ein Teil der vertikalen Seite 17, welche an der Längsseite 8 liegt, ebenfalls opak ausgebildet, wobei dann auf einen opaken Bereich der vertikalen Wandung 14 der Längsbefestigungsnut 6 verzichtet wurde. Es hat sich allerdings herausgestellt, dass gerade bei diesem Ausführungsbeispiel an sich die Opazität im Bereich der Längsbefestigungsnut 6 ausreichend ist, sodass in einer abweichenden Ausführungsform auf die Opazität an der Längsseite 8, also im Bereich der Feder 16, auch verzichtet werden kann.

Obgleich das in Figur 7 dargestellte Ausführungsbeispiel eine runde Wandung der Längsbefestigungsnut zu dem wenigstens teilweise oberhalb der Längsbefestigungsnut 6 angeordneten Längskanal 2 bzw. eine entsprechend runde Seite dieses Längskanals 2 zu der Längsbefestigungsnut 6 aufweist, kann über den Neigungswinkel zur Horizontalen, welche durch oben 18 und unten 19 definiert werden kann, diese gebogene Seite bzw. Wandung in eine obere Wandung 12 bzw. untere, zur Längsbefestigungsnut 6 gerichtete Seite 9 einerseits und in eine vertikale Wandung 14 bzw. vertikale, zur Längsbefestigungsnut 6 gerichtete Seite 13 anderseits unterteilt werden, indem entsprechende Wandungen und Seiten mit einem Neigungswinkel unter 45 Grad gegenüber der Horizontalen als horizontal angesehen werden können, sodass diese obere Wandungen oder Seiten bzw. untere Wandungen oder Seiten darstellen können, während Wandungen oder Seiten mit einem Winkel über 45 Grad zur Horizontalen als vertikale Seiten bzw. Wandungen bezeichnet werden.

### Bezugszeichenliste:

| | | | |
|---|---|---|---|
| 1 | Schwimmbadabdeckungsprofil | 10 | Oberseite |
| 2 | wenigstens teilweise oberhalb der Längsbefestigungsnut 6 angeordneter Längskanal | 11 | Unterseite |
| | | 12 | obere Wandung |
| | | 13 | vertikale, zur Längsbefestigungsnut 6 gerichtete Seite |
| 3 | Längskanal | | |
| 4 | Längskanal | 14 | vertikale Wandung |
| 5 | Längskanal | 15 | untere Wandung |
| 6 | Längsbefestigungsnut | 16 | Feder |
| 7 | Längsseite | 17 | vertikale Seite |
| 8 | Längsseite | 18 | oben |
| 9 | untere, zur Längsbefestigungsnut 6 gerichtete Seite | 19 | unten |

## Patentansprüche

1. Transparentes Schwimmbadabdeckungsprofil (1), mit wenigstens einem Längskanal (2) sowie mit wenigstens einer Längsbefestigungsnut (6) an einer Längsseite (7), wobei der Längskanal (2) wenigstens teilweise oberhalb der Längsbefestigungsnut (6) angeordnet ist, wobei zumindest eine untere, zur Längsbefestigungsnut (6) gerichtete Seite (9) des Längskanals (2) und/oder zumindest eine obere Wandung (12) der Längsbefestigungsnut (6) wenigstens teilweise opak ausgebildet ist, **dadurch gekennzeichnet, dass** der opake Anteil des Schwimmbadabdeckungsprofils (1) von unten (19) gesehen 40 % nicht übersteigt.

2. Schwimmbadabdeckungsprofil (1) nach Anspruch 1, **dadurch gekennzeichnet, dass** die gesamte untere, zur Längsbefestigungsnut (6) gerichtete Seite (9) des Längskanals (2) und/oder die gesamte obere Wandung (12) der Längsbefestigungsnut (6) opak ausgebildet ist.

3. Schwimmbadabdeckungsprofil (1) nach Anspruch 2, **dadurch gekennzeichnet, dass** sämtliche zur Längsbefestigungsnut (6) gerichtete Seiten (9, 13) des Längskanals (2) und/oder sämtliche, zu dem Längskanal (2) gerichtete Wandungen (12, 14) der Längsbefestigungsnut (6) opak ausgebildet sind.

4. Schwimmbadabdeckungsprofil (1) nach Anspruch 3, **dadurch gekennzeichnet, dass** sämtliche Wandungen (12, 14, 15) der Längsbefestigungsnut (6) opak ausgebildet sind.

5. Schwimmbadabdeckungsprofil (1) nach einem der Ansprüche 1 bis 4, **dadurch gekennzeichnet, dass** an einer der Längsbefestigungsnut (6) gegenüberliegenden Längsseite (8) des Schwimmbadabdeckungsprofils (1) eine mit der Längsbefestigungsnut (6) korrespondierende Feder (16) angeordnet ist.

6. Schwimmbadabdeckungsprofil (1) nach Anspruch 5, **dadurch gekennzeichnet, dass** die Feder (16) und/oder eine vertikale Seite (17) eines Längskanals (5), an welcher die Feder (16) angeordnet ist, zumindest teilweise opak ausgebildet ist.

7. Schwimmbadabdeckungsprofil (1) nach Anspruch 6, **dadurch gekennzeichnet, dass** die Feder (16) zur Gänze und/oder die vertikale Seite (17) zumindest von der Feder (16) ausgehend bis zu einer Unterseite (10) des Längskanals (5) opak ausgebildet ist.

8. Schwimmbadabdeckungsprofil (1) nach einem der Ansprüche 1 bis 7, **dadurch gekennzeichnet, dass** der opake Anteil des Schwimmbadabdeckungsprofils (1) von oben (18) gesehen 40 % nicht übersteigt.

9. Schwimmbadabdeckungsprofil (1) nach einem der Ansprüche 1 bis 8, **dadurch gekennzeichnet, dass** der opake Anteil längskanalseitig und/oder federseitig von oben (18) oder unten (19) gesehen 20 % nicht übersteigt.

10. Schwimmbadabdeckungsprofil (1) nach einem der Ansprüche 1 bis 9, **dadurch gekennzeichnet, dass** der opake Masseanteil 30 % nicht übersteigt.

11. Schwimmbadabdeckungsprofil (1) nach einem der Ansprüche 1 bis 10, **dadurch gekennzeichnet, dass** die Oberseite (10) sämtlicher Längskanäle (2, 3, 4, 5) transparent ausgebildet ist.

12. Schwimmbadabdeckungsprofil (1) nach einem der Ansprüche 1 bis 11, **dadurch gekennzeichnet, dass** die Unterseite (11) sämtlicher Längskanäle (2, 3, 4, 5), abgesehen von der unteren, zur Längsbefestigungsnut (6) gerichteten Seite (9) des wenigstens teilweise oberhalb der Längsbefestigungsnut (6) angeordneten Längskanals (2), zumindest zu 90 % transparent ausgebildet ist.

13. Schwimmbadabdeckungsprofil (1) nach einem der Ansprüche 1 bis 12, **dadurch gekennzeichnet, dass** die Unterseite (10) des Schwimmbadabdeckungsprofils (1) zumindest zu 90 % transparent ausgebildet ist.

14. Schwimmbadabdeckungsprofil (1) nach einem der Ansprüche 1 bis 13, **dadurch gekennzeichnet, dass** die transparenten Wandungen (12, 14, 15) und Seiten (9, 10, 11, 17) sowie die opaken Wandungen (12, 14, 15) und Seiten (9, 10, 11, 17) einen übereinstimmenden Farbton aufweisen.

## Claims

1. Transparent swimming pool cover profile (1) with at least one longitudinal channel (2) and with at least one longitudinal attachment groove (6) on a longitudinal side (7), wherein the longitudinal channel (2) is at least partially arranged above the longitudinal attachment groove (6), wherein at least one lower side (9) of the longitudinal channel (2) directed towards the longitudinal attachment groove (6) and/or at least one upper wall (12) of the longitudinal attachment groove (6) is at least partially opaque, **characterized in that** the opaque portion of the swimming pool cover profile (1) viewed from below (19) does not exceed 40 %.

2. Swimming pool cover profile (1) according to Claim 1, **characterized in that** the entire bottom side (9) of the longitudinal channel (2) directed towards the longitudinal attachment groove (6) and/or the entire upper wall (12) of the longitudinal attachment groove (6) is opaque.

3. Swimming pool cover profile (1) according to Claim 2, **characterized in that** all sides (9, 13) of the longitudinal channel (2) directed towards the longitudinal attachment groove (6) and/or all walls (12, 14) of the longitudinal attachment groove (6) directed towards the longitudinal channel (2) are opaque.

4. Swimming pool cover profile (1) according to Claim 3, **characterized in that** all walls (12, 14, 15) of the longitudinal attachment groove (6) are opaque.

5. Swimming pool cover profile (1) according to any one of Claims 1 to 4, **characterized in that**, at one longitudinal side (8) of the swimming pool cover profile (1) opposite to the longitudinal attachment groove (6), a spring (16) corresponding to the longitudinal attachment groove (6) is arranged.

6. Swimming pool cover profile (1) according to Claim 5, **characterized in that** the spring (16) and/or a vertical side (17) of a longitudinal channel (5), at which the spring (16) is arranged, is at least partially opaque.

7. Swimming pool cover profile (1) according to Claim 6, **characterized in that** the spring (16) is opaque in its entirety and/or the vertical side (17) starting from at least the spring (16) up to an underside (10) of the longitudinal channel (5) is opaque.

8. Swimming pool cover profile (1) according to one of the Claims 1 to 7, **characterized in that** the opaque portion of the swimming pool cover profile (1) viewed from above (18) does not exceed 40 %.

9. Swimming pool cover profile (1) according to any one of the Claims 1 to 8, **characterized in that** the opaque portion on the longitudinal channel side and/or spring side viewed from above (18) or below (19) does not exceed 20 %.

10. Swimming pool cover profile (1) according to any one of the Claims 1 to 9, **characterized in that** the opaque mass proportion does not exceed 30 %.

11. Swimming pool cover profile (1) according to any one of the Claims 1 to 10, **characterized in that** the top side (10) of all longitudinal channels (2, 3, 4, 5) is transparent.

12. Swimming pool cover profile (1) according to any one of the Claims 1 to 11, **characterized in that** the underside (11) of all longitudinal channels (2, 3, 4, 5), apart from the lower side (9) of the longitudinal channel (2) arranged at least partially above the longitudinal attachment groove (6) directed towards the longitudinal attachment groove (6), is transparent to an extent of at least 90 %.

13. Swimming pool cover profile (1) according to any one of the Claims 1 to 12, **characterized in that** the underside (10) of the swimming pool cover profile (1) is transparent to an extent of at least 90 %.

14. Swimming pool cover profile (1) according to any one of the Claims 1 to 13, **characterized in that** the transparent walls (12, 14, 15) and sides (9, 10, 11, 17) as well as the opaque walls (12, 14, 15) and sides (9, 10, 11, 17) match in colour.

## Revendications

1. Profilé de couverture de piscine transparent (1) avec au moins un conduit longitudinal (2) ainsi qu'avec au moins une rainure de fixation longitudinale (6) sur un côté longitudinal (7), sachant que le conduit longitudinal (2) est disposé au moins en partie au-dessus de la rainure de fixation longitudinale (6), sachant qu'au moins un côté (9) inférieur du conduit longitudinal (2), orienté vers la rainure de fixation longitudinale (6) et/ou au moins une paroi supérieure (12) de la rainure de fixation longitudinale (6) sont constitués opaques au moins en partie, **caractérisé en ce que** la partie opaque du profilé de couverture de piscine (1), vue de dessous (19) ne dépasse pas les 40 %.

2. Profilé de couverture de piscine (1) selon la revendication 1, **caractérisé en ce que** tout le côté (9) inférieur du conduit longitudinal (2) orienté vers la rainure de fixation longitudinale (6), et/ou toute la paroi supérieure (12) de la rainure de fixation longitudinale (6) sont constitués opaques.

3. Profilé de couverture de piscine (1) selon la revendication 2, **caractérisé en ce que** tous les côtés (9, 13) du conduit longitudinal (2), orientés vers la rainure de fixation longitudinale (6), et/ou toutes les parois (12, 14) de la rainure de fixation longitudinale (6), orientées vers le conduit longitudinal (2) sont constituées opaques.

4. Profilé de couverture de piscine (1) selon la revendication 3, **caractérisé en ce que** toutes les parois (12, 14, 15) de la rainure de fixation longitudinale (6) sont constituées opaques.

5. Profilé de couverture de piscine (1) selon l'une quelconque des revendications 1 à 4, **caractérisé en ce qu'**un ressort (16) correspondant à la rainure de fixation longitudinale (6) est disposé sur un côté longitudinal (8) opposé à la rainure de fixation longitudinale (6) du profilé de couverture de piscine (1) .

6. Profilé de couverture de piscine transparent (1) selon la revendication 5, **caractérisé en ce que** le ressort (16) et/ou un côté vertical (17) d'un conduit longitudinal (5), sur lequel le ressort (16) est disposé, est constitué opaque au moins en partie.

7. Profilé de couverture de piscine transparent (1) selon la revendication 6, **caractérisé en ce que** le ressort (16) est entièrement constitué opaque et/ou le côté vertical (17) est constitué opaque en partant au moins du ressort (16) jusqu'à une face inférieure (10) du conduit longitudinal (5).

8. Profilé de couverture de piscine transparent (1) selon l'une quelconque des revendications 1 à 7, **caractérisé en ce que** la partie opaque du profilé de couverture de piscine (1), vu de dessus (18), ne dépasse pas les 40 %.

9. Profilé de couverture de piscine transparent (1) selon l'une quelconque des revendications 1 à 8, **caractérisé en ce que** la partie opaque, vue de dessus (18) ou de dessous (19), ne dépasse pas de 20 % du côté du canal longitudinal et/ou du côté de ressort.

10. Profilé de couverture de piscine (1) selon l'une quelconque des revendications 1 à 9, **caractérisé en ce que** la partie de masse opaque ne dépasse pas les 30 %.

11. Profilé de couverture de piscine (1) selon l'une quelconque des revendications 1 à 10, **caractérisé en ce que** la face supérieure (10) de tous les conduits longitudinaux (2, 3, 4, 5) est constituée transparente.

12. Profilé de couverture de piscine (1) selon l'une quelconque des revendications 1 à 11, **caractérisé en ce que** la face inférieure (11) de tous les conduits longitudinaux (2, 3, 4, 5), à l'exception du côté inférieur (9) orienté vers la rainure de fixation longitudinale (6) du conduit longitudinal (2) disposé au moins en partie au-dessus de la rainure de fixation longitudinale (6), est constituée transparente au moins à 90 %.

13. Profilé de couverture de piscine (1) selon l'une quelconque des revendications 1 à 12, **caractérisé en ce que** la face inférieure (10) du profilé de couverture de piscine (1) est constituée transparente au moins à 90 %.

14. Profilé de couverture de piscine (1) selon l'une quelconque des revendications 1 à 13, **caractérisé en ce que** les parois (12, 14, 15) et côtés (9, 10, 11, 17) transparents, ainsi que les parois (12, 14, 15) et côtés opaques (9, 10, 11, 17) comportent une nuance de couleur correspondante.
